# EUROPÄISCHE PATENTANMELDUNG

(11) **EP 4 520 777 A1**
(43) Veröffentlichungstag der Anmeldung: **12.03.2025**
(21) Anmeldenummer: 23195585.7
(22) Anmeldetag: 06.09.2023
(51) Int. Cl.: C08G 77/12, C08G 77/38, C08G 77/46, C08L 83/12, C08G 77/04

(54) **VERFAHREN ZUR HERSTELLUNG HOCHWERTIGER HYDROSILYLIERUNGSPRODUKTE**

(71) Anmelder: Evonik Operations GmbH, 45128 Essen (DE)
(72) Erfinder: LOBERT, Matthias, 45309 Essen (DE); REIBOLD, Thomas, 45701 Herten (DE); SPORREITER, Linda, 45326 Essen (DE)
(74) Vertreter: Evonik Patent Association

(57) **Zusammenfassung**

Die Erfindung betrifft ein Verfahren zur Herstellung von organisch modifizierten Polysiloxanen und/oder Silanen durch Hydrosilylierung, umfassend die Umsetzung mindestens eines SiHfunktionellen Siloxans und/oder Silans mit mindestens einer ungesättigten organischen Verbindung in Anwesenheit mindestens eines Edelmetallkatalysators, wobei die Umsetzung in Anwesenheit von Wasser durchgeführt wird, wobei 0,01 bis 5 Gew.-% Wasser eingesetzt werden, Gew.-% bezogen auf die Gesamtmasse der Reaktanten. Weiterhin betrifft sie die entsprechenden Hydrosilylierungsprodukte sowie deren Verwendung.

## Beschreibung

Die vorliegende Erfindung liegt auf dem Gebiet der Silikone. Sie betrifft insbesondere ein Verfahren zur Herstellung von Hydrosilylierungsprodukten, sowie die Produkte, die nach diesem Verfahren hergestellt werden können und deren Verwendung, vorzugsweise als grenzflächenaktive Substanzen.

Unter Hydrosilylierungsprodukten versteht der Fachmann vorzugsweise SiC-verknüpfte, organomodifizierte Siloxane, insbesondere Polyethersiloxane, die mit ihrem weit einstellbaren Tensidverhalten eine industriell sehr wichtige Stoffklasse darstellen.

Hydrosilylierungsreaktionen von SiH-Gruppen tragenden Siloxanen und/oder Silanen mit Verbindungen, die eine C=C-Doppelbindung enthalten, werden kontinuierlich oder diskontinuierlich und in jedem Fall in Gegenwart eines Edelmetall-Katalysators durchgeführt.

Dem Fachmann sind entsprechend katalytisch aktive Verbindungen des Platins, Palladiums, Rhodiums, Rutheniums, Iridiums und/oder Osmiums bekannt.

Im Stand der Technik wird meist auf die Platinmetall-katalysierte Anlagerung SiH-Gruppen tragender Siloxane und/oder Silane an olefinisch funktionalisierte Verbindungen, wie z.B. an Allylpolyether zurückgegriffen, wie z.B. in dem Buch "Chemie und Technologie der Silicone", Verlag Chemie, 1960, Seite 43, und in der Patentliteratur beschrieben.

Als Katalysatoren haben sich in der heutigen betrieblichen Praxis überwiegend Pt-Katalysatoren wie z.B. Hexachloroplatinsäure (US 2823218), cis-Diammino-platin(II)chlorid und Karstedt-Katalysator (US 3775452) durchgesetzt.

Auch wenn edelmetallkatalysierte Hydrosilylierungsreaktionen dem Fachmann schon lange bekannt sind, besteht dennoch immer das Streben, derartige Reaktionen weiter zu optimieren. Gerade in der heutigen Zeit steht das Streben nach ressourcenschonenderen, effizienten Verfahren im Fokus.

Da edelmetallkatalysierte Hydrosilylierungsreaktionen überwiegend in einer Batch- oder Semibatch-Fahrweise in meist alten, sich langjährig in Betrieb befindenden Anlagen durchgeführt werden, bestand ein Bedarf ein einfaches und besonders effizientes Verfahren zur Herstellung von Hydrosilylierungsprodukten zu entwickeln, um eine bessere Raum-Zeit-Ausbeuten realisieren zu können und das Investment in neue Anlagen zu verzögern und so Ressourcen zu sparen.

Die Aufgabe der vorliegenden Erfindung war demnach ein neues, effizientes Verfahren zur Durchführung von Hydrosilylierungsreaktionen zu entwickeln, welches im Sinne der Nachhaltigkeit, Ressourcenschonung und der Einsparung von Energie ermöglicht, organomodifizierte Polysiloxane, wie z.B. Polyethersiloxane, herzustellen, mit im wesentlichen äquivalenter Qualität zu organomodifizierten Polysiloxanen, wie z.B. Polyethersiloxanen, hergestellt nach dem bekannten Stand der Technik.

Überraschenderweise wurde im Rahmen der vorliegenden Erfindung nun gefunden, dass die Durchführung der edelmetallkatalysierten Hydrosilylierungsreaktion in Anwesenheit von geringen Mengen Wasser, welches vorzugsweise als Cokatalysator dient, ein hocheffizientes Verfahren zur Herstellung qualitativ hochwertiger Hydrosilylierungsprodukte ermöglicht. Der Einsatz von geringen Mengen Wasser, wie in Anspruch 1 quantifiziert, führt zu qualitativ äquivalenten Hydrosilylierungsprodukten im Vergleich zu Hydrosilylierungsprodukten hergestellt in einer analogen Umsetzung in Abwesenheit von Wasser. Positiver Effekte durch die verkürzte Reaktionszeit ist die eingesparte Energie, die für den Prozess durch verkürzten Betrieb des Rührers und verkürzte Aufrechterhaltung der Temperatur nötig ist, und ermöglicht zudem eine optimierte Raum-ZeitAusbeute und somit eine gesteigerte Kapazität einer Anlage. Letztgenannter Punkt hat zur Folge, dass bestehende Anlagen später an die Kapazitätsgrenze kommen und das Investment in neue Anlagen somit auf der Zeitachse nach hinten geschoben werden kann.

Nicht nur der positive reaktionsbeschleunigende Effekt des Wassers ist für den Fachmann überraschend, sondern insbesondere auch der ausbleibende negative Effekt auf die Produktqualität.

US 6,437,162 B1 beschreibt ein Verfahren zur Herstellung von geruchsarmen Hydrosilylierungsprodukten dergestalt, dass dem Hydrosilylierungprodukt nach beendeter Reaktion eine definierte Wassermenge von 5-20% zugesetzt wird und anschließend destillativ im Vakuum wieder entfernt wird, um ein geruchsoptimiertes Produkt zu erhalten. In der Einleitung erläutert O'Lenick die generellen Rahmenbedingungen einer Hydrosilylierungreaktion und beschreibt im Zuge dessen, dass man bei der Hydrosilylierung eines wasserstofftragenden Polysiloxans mit einen Allylfunktionellen Polyether den Allylpolyether im mindestens 20 mol-%igen Überschuss einsetzen muss, um die SiH-Gruppen des Polysiloxans quantitativ umzusetzen. Darüber hinaus weist er darauf hin, dass es bei Anwesenheit von OH-funktionellen Gruppen wie Wasser oder Alkoholen im Reaktionsgemisch zu unerwünschten SiH-Abbaureaktionen unter Ausbildung von SiOC-Verknüpften Nebenprodukten kommt.

Des Weiteren wird in EP 2628771 A1 beschrieben, dass man Hydrosilylierungreaktionen auch vorteilhaft in wässrigen Emulsionen durchführen kann, und in EP 1754740 A2 wird die vorteilhafte Durchführung der Hydrosilylierungsreaktion unter Verwendung von Wasser als Reaktionsmedium (Lösungsmittel) beschrieben.

Überraschenderweise wurde im Rahmen der vorliegenden Erfindung gefunden, dass die Durchführung einer Edelmetall-katalysierten Hydrosilylierung eines H-funktionellen Siloxans und/oder Silans mit einer ungesättigten organischen Verbindung, bevorzugt allylfunktionellem Polyether, in Anwesenheit von geringen Mengen Wasser, wie in Anspruch 1 angegeben, sehr schnell zu einem gewünschten vorzugsweise quantitativen Umsatz der SiH-Gruppen des Polysiloxans führt, im Ver-

gleich zu einer ansonsten analogen Vorgehensweise allerdings ohne Einsatz von Wasser und dass dieses beschleunigte Umsatzverhalten ohne signifikante Nebenproduktbildung von statten geht.

Gegenstand der vorliegenden Erfindung ist somit ein Verfahren zur Herstellung von organisch modifizierten Polysiloxanen und/oder Silanen durch Hydrosilylierung, umfassend folgende Schritte:
a) Umsetzung mindestens eines SiH-funktionellen Siloxans und/oder Silans mit mindestens einer ungesättigten organischen Verbindung in Anwesenheit mindestens eines Edelmetallkatalysators, sowie
b) optionale Destillation,
c) optionale Nachbehandlung mit mindestens einem Adsorbens und optional abschließende Feststoffabtrennung, vorzugsweise durch Filtration,

wobei die Umsetzung in Schritt a) in Anwesenheit von Wasser durchgeführt wird,
wobei bei der Umsetzung in Schritt a) 0,01 bis 5 Gew.-% Wasser, bevorzugt 0,05 bis 2,0 Gew.-% Wasser, weiter bevorzugt 0,1 bis 1 Gew.-% Wasser, besonders bevorzugt 0,15 bis 0,7 Gew.-% Wasser eingesetzt werden, Gew.-% bezogen auf die Gesamtmasse der Reaktanten. Dabei ergibt sich die Gesamtmasse der Reaktanten als Summe aus gesamter Masse des insgesamten eingesetzten mindestens einen SiH-funktionellen Siloxans und/oder Silans plus der gesamten Masse der insgesamt eingesetzten mindestens einen ungesättigten organischen Verbindung.

Erfindungsgemäß wird also die Umsetzung mindestens eines SiH-funktionellen Siloxans und/oder Silans mit mindestens einer ungesättigten organischen Verbindung in Anwesenheit mindestens eines Edelmetallkatalysators und in Anwesenheit von Wasser durchgeführt. Dabei dient das Wasser vorzugsweise als Cokatalysator.

Vorzugsweise wird die Umsetzung bis zum im wesentlichen quantitativen SiH-Umsatz (bevorzugt > 98%, besonders bevorzugt > 99%) geführt. Die Bestimmung des SiH-Umsatzes der Hydrosilylierung kann auf übliche, dem Fachmann bekannte Weise erfolgen, vorzugsweise durch Butylat-katalysierte Freisetzung des in einer der Reaktionsmatrix entnommenen Probe enthaltenen (Rest-)Si-H als elementarem Wasserstoff und dessen quantitativer Bestimmung erfolgen.

In dem erfindungsgemäßen Verfahren werden demnach mindestens 4 Komponenten eingesetzt: (i) SiH-funktionelles Siloxan und/oder Silan; (ii) ungesättigte organische Verbindung; (iii) Edelmetallkatalysator; (iv) Wasser und optional (v) Adsorbens.

Ebenfalls Gegenstand der vorliegenden Erfindung sind Hydrosilylierungsprodukte, hergestellt nach dem erfindungsgemäßen Verfahren, sowie deren Verwendung, z.B. als grenzflächenaktive Substanzen.

Die Begriffe "Polysiloxan" und "Siloxan" werden im Sinn dieser Erfindung synonym verwendet. Organomodifizierte Polysiloxane sind dem Fachmann an sich bekannt, Bevorzugte organomodifizierte Polysiloxane sind z.B. Polyethersiloxane.

Die erfindungsgemäßen Gegenstände werden nachfolgend beispielhaft beschrieben, ohne dass die Erfindung auf diese beispielhaften Ausführungsformen beschränkt sein soll. Sind nachfolgend Bereiche, allgemeine Formeln oder Verbindungsklassen angegeben, so sollen diese nicht nur die entsprechenden Bereiche oder Gruppen von Verbindungen umfassen, die explizit erwähnt sind, sondern auch alle Teilbereiche und Teilgruppen von Verbindungen, die durch Herausnahme von einzelnen Werten (Bereichen) oder Verbindungen erhalten werden können. Werden im Rahmen der vorliegenden Beschreibung Dokumente zitiert, so soll deren Inhalt, insbesondere in Bezug auf den Sachverhalt, in dessen Zusammenhang das Dokument zitiert wurde, vollständig zum Offenbarungsgehalt der vorliegenden Erfindung gehören. Werden in der vorliegenden Erfindung chemische (Summen-)Formeln verwendet, so können die angegebenen Indizes sowohl absolute Zahlen als auch Mittelwerte darstellen. Bei polymeren Verbindungen stellen die Indizes vorzugsweise Mittelwerte dar. Bei Prozentangaben handelt es sich, wenn nicht anders angegeben, um Angaben in Gewichtsprozent. Sind nachfolgend Messwerte angegeben, so sind diese Messungen, wenn nicht anders angegeben bei Normalbedingungen (20 °C und 1013 mbar) durchgeführt worden. Werden nachfolgend Mittelwerte angegeben, so handelt es sich, wenn nicht anderes angegeben, um Gewichtsmittel.

Das Wortfragment "Poly" umfasst im Zusammenhang mit dieser Erfindung nicht nur Verbindungen mit zumindest 3 Wiederholungseinheiten eines oder mehrerer Monomere im Molekül, sondern insbesondere auch solche Zusammensetzungen von Verbindungen, die eine Molekulargewichtsverteilung aufweisen und dabei ein mittleres Molekulargewicht von mindestens 200 g/mol besitzen. Bei dieser Definition ist dem Umstand Rechnung getragen, dass es auf dem betrachteten Gebiet der Technik üblich ist, solche Verbindungen bereits als Polymere zu bezeichnen, auch wenn sie nicht einer Polymerdefinition analog OECD- oder REACH-Richtlinien zu genügen scheinen.

Im erfindungsgemäßen Verfahren werden mindestens ein SiH-funktionelles Siloxan und/oder Silan eingesetzt. Dies umfasst auch die Möglichkeit, dass z.B. deren Gemische eingesetzt werden, also z.B. Gemische von SiH-funktionellen Siloxanen und/oder Silanen.

Diese Verbindungen sind dem Fachmann als solche bekannt. Vorzugsweise kann die Bereitstellung SiH-funktioneller Siloxane für das erfindungsgemäße Verfahren durch die Durchführung des aus dem Stand der Technik bekannten Verfahrens der Äquilibrierung erfolgen, bevorzugt an sulfonsaurem Harz. Die Äquilibrierung der verzweigten oder linearen, ggf. hydrosilylierten, Poly-(organo)siloxane mit end- und/oder seitenständigen SiH-Funktionen wird im Stand der Technik, z. B. in den Schriften EP 1 439 200 A1, DE 10 2007 055 485 A1 und DE 10 2008 041 601 ausführlich beschrieben. Diese Schriften werden hiermit als Referenz eingeführt und gelten als Teil der Offenbarung der vorliegenden Erfindung.

Als Reaktionspartner des mindestens einen SiH-funktionellen Siloxans und/oder Silans im Sinne der Hydrosilylierung wird mindestens eine ungesättigte organische Verbindung eingesetzt.

Es können beliebige organische ungesättigte Verbindungen eingesetzt werden. Vorzugsweise werden terminal ungesättigte organische Verbindungen eingesetzt.

So können z.B. terminal ungesättigte Allyl-funktionelle Polyether eingesetzt werden. Oder es können z.B. auch andere niedermolekulare terminal ungesättigte organische Verbindungen eingesetzt werden.

Bevorzugt können terminal-ungesättigte Polyether wie Allyl- oder Methallyl-funktionelle Polyether eingesetzt werden, besonders bevorzugt Allylpolyether. Diese Polyether können nach den bekannten Verfahren, die dem Stand der Technik zu entnehmen sind, hergestellt werden. Die Alkoxylierung von ungesättigten Startverbindungen kann sowohl unter Basen-, Säuren- oder Doppelmetallcyanid-(DMC)-Katalyse hergestellt werden.

Als Einstieg in diese Thematik sei auf die Monografie "Alkylene oxides and their polymers" von F.E. Bailey, Marcel Dekker Verlag, 1991 verwiesen. Die Herstellung und Verwendung von DMC-Alkoxylierungskatalysatoren ist seit den 1960er Jahren bekannt und werden zum Beispiel in US 3,427,256, US 3,427,334, US 3,427,335, US 3,278,457, US 3,278,458 oder US 3,278,459 dargestellt. Noch wirksamere DMC-Katalysatoren, im speziellen Zink-Cobalt-Hexacyanokomplexe wurden in der Folgezeit entwickelt, z.B. in US 5,470,813 und US 5,482,908.

Die terminalen Hydroxygruppen der Polyether können frei bleiben oder können teilweise oder komplett modifiziert werden, um die optimale Kompatibilität in der späteren Anwendungsmatrix einstellen zu können.

Als Modifikation sind Umesterungen, Veresterungen oder Veretherungen ebenso denkbar wie weitere Kondensations- oder Additionsreaktionen mit z. B. Isocyanaten. Die terminalen Hydroxylgruppen der Polyether im Rahmen der vorliegenden Erfindung bleiben bevorzugt frei oder können vorzugsweise in acetylierter oder methylierter Form vorliegen.

Als terminal ungesättigte organische Verbindungen können bevorzugt Alken-Verbindungen, die noch weitere Substituenten tragen können, eingesetzt werden. Es können zum Beispiel Allylglykol, Allylglycidether, Glycerinmonoallylether, Allylanisol, Allylphenol, Eugenol, Hexenol, C6-C20-Alken, Vinylcyclohexenmonooxid, Undecylensäure und/oder Undecylensäuremethylester eingesetzt werden, insbesondere bevorzugt Allylglykol, Tetradecen, Hexadecen, Octadecen, Eugenol und/oder Glycerinmonoallylether.

Neben oder anstelle von terminal ungesättigten Verbindungen können auch Verbindungen mit internen Doppelbindungen wie beispielsweise Norbornen-Derivate oder auch interne Alkin-Verbindungen eingesetzt werden. Besonders bevorzugt werden allerdings terminal ungesättigte Alkene und/oder Polyether eingesetzt.

Es entspricht daher einer besonders bevorzugten Ausführungsform der Erfindung, wenn die mindestens eine ungesättigte organische Verbindung ausgewählt ist
a) aus der Gruppe der terminal ungesättigten organischen Verbindungen,
   vorzugsweise aus der Gruppe der terminal ungesättigten Alkenverbindungen, die ggf. noch weitere Substituenten tragen können,
   bevorzugt ausgewählt aus der Gruppe bestehend aus Allylglycidether, Glycerinmonoallylether, Allylglykol, Allyloxyethanol, Allylanisol, Allylphenol, Eugenol, Hexenol, C6-C20-Alken, Undecylensäure, Undecylensäuremethylester, Vinylcyclohexenmonooxid und terminal-ungesättigte Polyether,
   weiter bevorzugt ausgewählt aus der Gruppe bestehend aus Allylglykol, Tetradecen, Hexadecen, Octadecen, Undecylensäuremethylester und terminal-ungesättigte Polyether, wobei terminal-ungesättigte Polyether, wie vorzugsweise Allyl- oder Methallyl-funktioneller Polyether besonders bevorzugt sind, und terminal-ungesättigte Allylpolyether ganz besonders bevorzugt sind,
      und/oder
b) aus der Gruppe der ungesättigten organischen Verbindungen mit mindestens einer internen C-C-Doppel- oder C-C-Dreifachbindung, wie vorzugsweise Alkin-Derivate.

Die Hydrosilylierung erfolgt in Anwesenheit mindestens eines Edelmetallkatalysators. Es können im erfindungsgemäßen Verfahren jegliche Edelmetallkatalysatoren verwendet werden, die eine SiC-Verknüpfungsreaktion zwischen einem SiH-funktionellen Polysiloxan und einer ungesättigten Verbindung katalysieren. Solche sind dem Fachmann wohlbekannt.

Bevorzugt einsetzbare katalytisch aktive Edelmetallkatalysatoren basieren vorzugsweise auf Verbindungen oder Komplexen des Platins, Palladiums, Rhodiums, Rutheniums, Iridiums und/oder Osmiums.

Bevorzugt als Edelmetallkatalysator einsetzbar sind im Rahmen der vorliegenden Erfindung Platinverbindungen wie Hexachloroplatinsäure, cis-Diamminoplatin^{(II)}chlorid und/oder Karstedt-Katalysator.

Pt⁽⁰⁾-Verbindungen, wie der Karstedt-Komplex, sind erfindungsgemäß als Edelmetallkatalysatoren besonders bevorzugt einsetzbar, insbesondere bevorzugt sind Komplexe mit Divinyl-tetramethyldisiloxanresten.

Darüber hinaus eignen sich vorzugsweise aber auch andere stabile nullwertige Platin-Olefinkomplexe, wie z.B. Bis-1,5-cyclooctadien-platin⁽⁰⁾, Tris-norbornen-platin⁽⁰⁾, Di-platin-tris(heptadien-1,6), Platin-(η2,η2-1,2,6,7-heptadien-1,6)(η2-1,2-heptadien-1,6) und/oder Platin-(η2-ethylen)( η2,η2-1,2,6,7-heptadien-1,6).

Wenn der mindestens eine Edelmetallkatalysator ausgewählt ist
aus Verbindungen des Platins, Palladiums, Rhodiums, Rutheniums, Iridiums und/oder Osmiums, vorzugsweise Verbindungen des Platins,
   und/oder
aus Komplexen des Platins, Palladiums, Rhodiums, Rutheniums, Iridiums und/oder Osmiums, vorzugsweise Komplexen des Platins,
so liegt eine weitere besonders bevorzugte Ausführungsform der Erfindung vor, wobei der Einsatz des Karstedt-Katalysators ganz besonders bevorzugt ist.

Die erfindungsgemäße Umsetzung in Schritt a) wird wie bereits beschrieben in Anwesenheit von Wasser durchgeführt. Das Wasser wird vorzugsweise als Cokatalysator eingesetzt.

Im Rahmen der Erfindung lassen sich beliebige verfügbare Qualitäten von Wasser einsetzen, wie z.B. Leitungswasser oder z.B. Quellwasser, vorzugsweise werden salzarmes oder demineralisiertes Wasser (sogenanntes VE-Wasser, vollentsalztes Wasser) verwendet. VE-Wasser ist dem Fachmann bekannt und kann auf bekannte Weise erhalten werden, z.B. durch Umkehrosmose oder z.B. auch durch den Einsatz von Ionenaustauschern.

Im Rahmen dieser Erfindung konnte überraschenderweise gefunden werden, dass der erfindungsgemäße Einsatz von Wasser, vorzugsweise als Cokatalysator, im Rahmen der erfindungsgemäßen Edelmetall-katalysierten Hydrosilylierung zu einem effizienteren Umsatzverhalten führt.

Vorzugsweise kann das Wasser bei der Umsetzung als eine weitere, separate Komponente zugegeben werden. Das Wasser kann vorzugsweise aber auch vorgemischt in bzw. mit einem der eingesetzten Reaktionspartner dem Reaktionsgemisch zugesetzt werden, also zum Beispiel im mit Wasser vorverdünnten terminal-ungesättigten Polyether und/oder z.B. im mit Wasser vorverdünnten Polysiloxan zugesetzt werden. Aufgrund der Verträglichkeit ist es besonders bevorzugt, das Wasser über die mindestens eine ungesättigte organische Verbindung zuzugeben, also z.B. mit Wasser vorverdünnten Polyether einzusetzen. Ebenfalls ist es besonders bevorzugt, das Wasser als separate Komponente zuzusetzen. Vorzugsweise ist es ebenfalls möglich, unterschiedliche Arten der Wasserzugabe zu kombinieren.

Bei der Durchführung des erfindungsgemäßen Verfahrens ist vorzugsweise für eine ausreichende Durchmischung zu sorgen. Das gilt insbesondere auch für alle bevorzugten Ausführungsformen des erfindungsgemäßen Verfahrens und ist für den Fachmann eine Selbstverständlichkeit.

In einer bevorzugten Ausführungsform des erfindungsgemäßen Verfahrens werden mindestens ein SiH-funktionelles Siloxan und mindestens eine ungesättigte organische Verbindung zusammen mit Wasser vorgelegt und vorzugsweise temperiert; dann gibt man den mindestens einen Edelmetallkatalysator zu und lässt bei der, dem Reaktionsgemisch angepassten optimalen Temperatur rühren, bis der SiH-Wert des Reaktionsgemisches einen nahezu quantitativen Umsatz (vorzugsweise > 98%, besonders bevorzugt > 99%) belegt.

In einer alternativen bevorzugten Ausführungsform kann es jedoch auch vorteilhaft sein, zunächst die mindestens eine ungesättigte organische Verbindung mit Wasser und Katalysator vorzulegen und vorzugsweise zu temperieren und erst dann das mindestens eine SiH-funktionelle Siloxan zuzugeben, vorzugsweise kontrolliert zuzudosieren.

In einer weiteren bevorzugten Ausführungsform kann es vorteilhaft sein, erst das mindestens eine SiH-funktionelle Siloxan gemeinsam mit dem Wasser vorzulegen, den Katalysator zuzusetzen und erst dann die mindestens eine ungesättigte organische Verbindung zuzugeben, vorzugsweise kontrolliert zuzudosieren, und bei, dem jeweiligen Reaktionsgemisch angepassten optimalen Temperatur zu rühren.

Vorzugsweise kann nach der Umsetzung mindestens eines SiH-funktionellen Siloxans und/oder Silans mit mindestens einer ungesättigten organischen Verbindung in Anwesenheit mindestens eines Edelmetallkatalysators und in Anwesenheit von Wasser optional eine Destillation erfolgen. Die optionale Destillation kann beispielsweise dazu dienen, Verunreinigungen, wie z.B. niedermolekulare Verunreinigungen, zu entfernen.

Vorzugsweise kann nach der erfindungsgemäßen Umsetzung eine optionale Nachbehandlung mit mindestens einem Adsorbens und optional abschließende Feststoffabtrennung, insbesondere bevorzugt durch Filtration, erfolgen.

Das optional einsetzbare mindestens eine Adsorbens kann vorzugsweise aus den üblichen im Stand der Technik bekannten Adsorbentien gewählt werden.

Als optional einsetzbare Adsorbentien eignen sich beispielsweise jegliche im Stand der Technik bekannten Adsorbentien.

Vorzugsweise kann das optional einsetzbare mindestens eine Adsorbens ausgewählt werden aus der Gruppe bestehend aus saure Ionenaustauscher, basische Ionenaustauscher, Chelatisierungsagenzien, Silicagele, funktionalisierte Silicagele (siehe z.B. WO 2017213809 A1), Aktivkohle (siehe z.B. CN 20150692397), Carbon black (siehe z.B. CN201510199280), Magnesiumsilikate und Magnesiumoxid.

Sollte im Rahmen einer bevorzugten Ausführungsform der Erfindung der optionale Einsatz von mindestens einem Adsorbens gewünscht sein, z.B. um die Qualität des Produktes weiter zu verbessern, so kann vorzugsweise nach erreichtem SiH-Umsatz dem Reaktionsgemisch optional mindestens ein Adsorbens nach Wahl zugesetzt werden, welches vorzugsweise nach vorgegebener Rührzeit bei bestimmter Temperatur abschließend bevorzugt per Filtration wieder entfernt werden kann und man erhält ein vorzugsweise farbreduziertes, besonders bevorzugt farbloses Hydrosilylierungsprodukt, insbesondere Polyethersiloxan.

Die Menge des im erfindungsgemäßen Verfahren bei der Umsetzung in Schritt a) eingesetzten Wassers beträgt vorzugsweise 0,01 bis 5 Gew.-% Wasser bezogen auf die Gesamtmasse der Reaktanten. Besonders bevorzugt werden 0,05 bis 2 Gew.-%, noch weiter bevorzugt 0,1 bis 1 Gew.-% und insbesondere bevorzugt 0,15 bis 0,7 Gew.-% Wasser eingesetzt, Gew.-% bezogen auf die Gesamtmasse der Reaktanten. Dies entspricht einer besonders bevorzugten Ausführungsform der Erfindung. Dabei ergibt sich die Gesamtmasse der Reaktanten als Summe aus gesamter Masse des insgesamten eingesetzten mindestens einen SiH-funktionellen Siloxans und/oder Silans plus der gesamten Masse der insgesamt eingesetzten mindestens einen ungesättigten organischen Verbindung.

Die erfindungsgemäße Hydrosilylierung wird vorzugsweise unter inerter Atmosphäre, bevorzugt unter Argon- oder Stickstoffstrom und bei Temperaturen von vorzugsweise 50 bis 130 C durchgeführt. Vorzugsweise kann sie bei normalem Atmosphärendruck durchgeführt werden, bevorzugt bei Normaldruck (1013,25 hPa = 1 atm). Die Hydrosilylierung kann jedoch z.B. auch bei Unterdruck oder z.B. auch unter Überdruck durchgeführt werden.

Ein weiterer Gegenstand der Erfindung sind Hydrosilylierungsprodukte, vorzugsweise organisch modifiziertes Polysiloxan und/oder Silan, insbesondere bevorzugt Polyethersiloxan, erhältlich durch ein Verfahren wie zuvor beschrieben.

Mittels des erfindungsgemäßen Verfahrens können z. B. die nachfolgend beschriebenen Polysiloxanverbindungen hergestellt werden:
Bevorzugte erfindungsgemäß erhältliche Polysiloxanverbindungen sind solche der Formel (I)

   Mₐ M'_{b} M"_{c} D_{d} D'ₑ D"_{f} Tg Qₕ Formel (I)

   ,
und zeichnen sich dadurch aus, dass
   - M: = [R¹₃SiO_{1/2}]
   - M`: = [R² R¹₂SiO_{1/2}]
   - M": = [R³ R¹₂SiO_{1/2}]
   - D: = [R¹₂SiO_{2/2}]
   - D`: = [R² R¹SiO_{2/2}]
   - D": = [R³ R¹SiO_{2/2}]
   - T: = [R¹SiO_{3/2}]
   - Q: = [SiO_{4/2}]

   - a: = 0 - 20, bevorzugt 0 - 10, insbesondere bevorzugt 2,
   - b: = 0 - 20, bevorzugt 0 - 10, insbesondere bevorzugt 0 oder 2,
   - c: = 0 - 20, bevorzugt 0 - 10, insbesondere bevorzugt 0 oder 2,
   - d: = 0 - 1000, bevorzugt 0 - 500, insbesondere bevorzugt 0 - 200,
   - e: = 0 - 30, bevorzugt 1 - 15, insbesondere bevorzugt 1 - 10,
   - f: = 0 - 30, bevorzugt 0 - 15, insbesondere bevorzugt 0 - 10,
   - g: = 0 - 20, bevorzugt 0 - 10, insbesondere bevorzugt 0 - 5,
   - h: = 0 - 20, bevorzugt 0 - 15, insbesondere bevorzugt 0 - 5,
mit der Maßgabe, dass die Summe aus a + b + c + d + e + f + g + h ≥ 3, sowie die Summe aus b + c + e + f ≥ 1 sein muss, sowie die Summe aus e + f bevorzugt ≥ 1
   und
   - R¹ =: unabhängig voneinander gleiche oder verschiedene Kohlenwasserstoffreste mit 1 - 7 Kohlenstoffatomen oder H, bevorzugt Methyl, Ethyl oder Phenyl, insbesondere bevorzugt Methyl,
   - R² =: unabhängig voneinander gleiche oder verschiedene Polyetherreste,
   - R³ =: unabhängig voneinander gleiche oder verschiedene Kohlenwasserstoffreste mit 8 - 20 Kohlenstoffatomen, die auch Heteroatome enthalten und weiter substituiert sein können, bevorzugt handelt es sich um SiC-verknüpfte Reste resultierend aus Alkindiol, sowie deren Alkoxylate, Allylglykol, Allyloxyethanol, Allylglycidether, Glycerinmonoallylether, Allylanisol, Eugenol, Hexenol, Hexadecen, Octadecen, Undecylensäure und/oder Undecylensäuremethylester, insbesondere bevorzugt Hexadecen, Octadecen, Eugenol und/oder Glycerinmonoallylether.

Die erfindungsgemäß bevorzugten Polysiloxanverbindungen der Formel (I) sind vorzugsweise erhältlich durch das oben beschriebene erfindungsgemäße Verfahren.

Die erfindungsgemäßen Hydrosilylierungsprodukte, vorzugsweise die bevorzugten Polysiloxanverbindungen, insbesondere bevorzugt der Formel (I), können für vielfältige Anwendungen eingesetzt werden, insbesondere ist der Einsatz als grenzflächenaktive Substanzen zu nennen. Insbesondere in Betracht kommt die Verwendung als Dispergieradditiv, Entschäumer, Benetzungshilfsmittel, Hydrophobierungsmittel oder vernetzendes Additiv vorzugsweise zum Einsatz in Pasten, Farben, Lacken, Überzügen, Beschichtungen, und/oder Anstrichmitteln, sowie in Antitranspirantien/Deodorantien, sowie in pharmazeutischen Formulierungen. Hinzu kommt vorzugsweise außerdem die Verwendung in Reinigungs- und/oder Pflegeformulierungen geeignet zur Reinigung und/oder Pflege harter Oberflächen und/oder geeignet zur Reinigung, Behandlung und Nachbehandlung von Textilien, sowie in kosmetischen Produkten. Hinzu kommt vorzugsweise weiterhin die Verwendung als Schaumstabilisatoren oder Schaumadditive für Polyurethanschäume. Hinzu kommt vorzugsweise die Verwendung als Adjuvant zur Verbesserung der Wirkung von Pflanzenschutzwirkstoffen und/oder als Träger für Pflanzenschutzwirkstoffe, wobei die Pflanzenschutzwirkstoffe vorzugsweise aus mikrobiologischen Pflanzenschutzwirkstoffen ausgewählt sind.

Ein weiterer Gegenstand der Erfindung ist somit die Verwendung von erfindungsgemäßen Hydrosilylierungsprodukten als grenzflächenaktive Substanz.

Ein weiterer Gegenstand der Erfindung ist die Verwendung von erfindungsgemäßen Hydrosilylierungsprodukten als Dispergieradditiv, Entschäumer, Benetzungshilfsmittel, Hydrophobierungsmittel oder vernetzendes Additiv vorzugsweise zum Einsatz in Pasten, Farben, Lacken, Überzügen, Beschichtungen und/oder Anstrichmitteln.

Ein weiterer Gegenstand der Erfindung ist die Verwendung von erfindungsgemäßen Hydrosilylierungsprodukten
(a) in Reinigungs- und/oder Pflegeformulierungen geeignet zur Reinigung und/oder Pflege harter Oberflächen und/oder geeignet zur Reinigung, Behandlung und/oder Nachbehandlung von Textilien, sowie in kosmetischen Produkten, oder
(b) als Schaumstabilisatoren oder Schaumadditive für Polyurethanschäume oder
(c) als Adjuvant zur Verbesserung der Wirkung von Pflanzenschutzwirkstoffen und/oder als Träger für Pflanzenschutzwirkstoffe, wobei die Pflanzenschutzwirkstoffe vorzugsweise aus mikrobiologischen Pflanzenschutzwirkstoffen ausgewählt sind.

### Messmethoden:

Zur Bestimmung von Parametern oder Messwerten werden im Rahmen der vorliegenden Erfindung vorzugsweise die nachfolgend beschriebenen Methoden verwendet. Insbesondere wurden diese Methoden in den Beispielen des vorliegenden Schutzrechts verwendet.

Die Bestimmung des SiH-Umsatzes der Hydrosilylierung erfolgt durch Butylat-katalysierte Freisetzung des in der Probe enthaltenen (Rest-)Si-H als elementarem Wasserstoff und dessen quantitativer Bestimmung.

Die nasschemische Analytik wurde in Anlehnung an internationale Standardmethoden durchgeführt: lodzahl (IZ; DGF C-V 11 a (53); Säurezahl (SZ; DGF C-V 2); OH-Zahl (ASTM D 4274 C).

In den nachfolgend aufgeführten Beispielen wird die vorliegende Erfindung beispielhaft beschrieben, ohne dass die Erfindung, deren Anwendungsbreite sich aus der gesamten Beschreibung und den Ansprüchen ergibt, auf die in den Beispielen genannten Ausführungsformen beschränkt sein soll.

### Rohstoffe:

Als Karstedt-Katalysator wurde in den nachfolgend aufgeführten Beispielen Platinum(0)-1,3-divinyl-1,1,3,3-tetramethyldisiloxan 2%ig gelöst in Xylol eingesetzt.

HMTS entspricht 1,1,1,3,3,5,5,5-Heptamethyltrisiloxan

### Beispiele:

### Beispiel 1a: Synthese eines HMTS-basierten Polyethersiloxans (erfindungsgemäß):

In einem mit Tropftrichter mit Druckausgleichsrohr, Thermometer, Intensivkühler und Sigma-Rührer versehenen 1 L Planschliffkolben wurden 498,2 g eines Allylpolyethers (EO-/PO-Mischalkoxylat (80:20 Gew.-%) und 3,89 g Wasser (0,6 Gew.-% bezogen auf die Reaktanten) vorgelegt und unter Rühren und Argonüberleitung auf 80°C erhitzt. Dann wurde Karstedt-Katalysator-Lösung mit einer Micropipette zugegeben (c (Ansatz) = 2 ppm Pt). Anschließend wurden 150 g des HMTS (SiH-Wert = 4,50 mol/kg) über den Tropftrichter innerhalb 1 h dergestalt zugetropft, dass die Temperaturdes Reaktionsgemisches nicht mehr als 95°C erreichte. Nach beendeter Zugabe wurde noch 1 h bei 95°C nachgerührt und dann der SiH-Umsatz stündlich bestimmt. (U(soll) > 98%) Es ergaben sich die in Tabelle 1 angegebene SiH-Umsätze nach der Natriumbutylatmethode.

### Beispiel 1b: Synthese eines HMTS-basierten Polyethersiloxans (nicht erfindungsgemäß):

In einem mit Tropftrichter mit Druckausgleichsrohr, Thermometer, Intensivkühler und Sigma-Rührer versehenen 1 L Planschliffkolben wurden 498,2 g eines Allylpolyethers (EO-/PO-Mischalkoxylat (80:20 Gew.-%) von Allylalkohol mit einer IZ von 41,5 g lod/100 g) vorgelegt und unter Rühren und Argonüberleitung auf 80°C erhitzt. Dann wurde Karstedt-Katalysator-Lösung mit einer Micropipette zugegeben (c (Ansatz) = 2 ppm Pt). Anschließend wurden 150 g des HMTS (SiH-Wert = 4,50 mol/kg) über den Tropftrichter innerhalb 1 h dergestalt zugetropft, dass die Temperaturdes Reaktionsgemisches nicht mehr als 95°C erreichte. Nach beendeter Zugabe wurde noch 1 h bei 95°C nachgerührt und dann der SiH-Umsatz stündlich bestimmt. (U(soll) > 98%) Es ergaben sich die in Tabelle 1 angegebene SiH-Umsätze nach der Natriumbutylatmethode.

**Tabelle 1: Wassergehalte und SiH-Umsatzverhalten der Beispiele 1a und 1b**

| **Beispiel** | **Wasser [%]** | **SiH-Umsatz [%]** | | | |
|---|---|---|---|---|---|
| | | **1h** | **2 h** | **3 h** | **4 h** |
| 1a | 0,6 | 97,3 | 99,0 | - | - |
| 1b | 0 | 83,0 | 96,6 | 98,8 | 98,9 |

### Beispiel 2a: Synthese eines kammständigen Polyethersiloxans (nicht erfindungsgemäß):

In einem mit Tropftrichter mit Druckausgleichsrohr, Thermometer, Intensivkühler und Sigma-Rührer versehenen 1 L Planschliffkolben wurden 491,7 g eines Allylalkohols (Ethoxylat von Allylalkohol mit einer IZ von 65,5 g lod/100 g, dessen terminale OH-Gruppe methyliert war) vorgelegt und unter Rühren und Argonüberleitung auf 75°C erhitzt. Dann wurde Karstedt-Katalysator-Lösung mit einer Micropipette zugegeben (c (Ansatz) = 4 ppm Pt). Anschließend wurden 400 g des Kammsiloxans (mit einer mittleren Kettenlänge von N = 6; SiH-Wert = 2,35 mol/kg) über den Tropftrichter innerhalb 90 min dergestalt zugetropft, dass die Temperatur des Reaktionsgemisches nicht mehr als 95°C erreichte. Nach beendeter Zugabe wurde noch 1 h bei 95°C nachgerührt und dann der SiH-Umsatz zwei-/einstündlich bestimmt. (U(soll) > 99%) Es ergaben sich die in Tabelle 2 angegebene SiH-Umsätze nach der Natriumbutylatmethode.

### Beispiel 2b: Synthese eines kammständigen Polyethersiloxans (erfindungsgemäß):

In einem mit Tropftrichter mit Druckausgleichsrohr, Thermometer, Intensivkühler und Sigma-Rührer versehenen 1 L Planschliffkolben wurden 491,7 g eines Allylpolyether (Ethoxylats von Allylalkohol mit einer IZ von 65,5 g lod/100 g, dessen terminale OH-Gruppe methyliert war) und 5,4 g Wasser (0,6 Gew.-% bezogen auf die Reaktanten) vorgelegt und unter Rühren und Argonüberleitung auf 75°C erhitzt. Dann wurde Karstedt-Katalysator-Lösung mit einer Micropipette zugegeben (c (Ansatz) = 4 ppm Pt). Anschließend wurden 400 g des Kammsiloxans (mit einer mittleren Kettenlänge von N = 6; SiH-Wert = 2,35 mol/kg) über den Tropftrichter innerhalb 90 min dergestalt zugetropft, dass die Temperatur des Reaktionsgemisches nicht mehr als 95°C erreichte. Nach beendeter Zugabe wurde noch 1 h bei 95°C nachgerührt und dann der SiH-Umsatz nach der Natriumbutylatmethode bestimmt. (U(soll) > 99%)

**Tabelle 2: Wassergehalte und SiH-Umsatzverhalten der Beispiele 2a und 2b**

| **Beispiel** | **Wasser [%]** | **SiH-Umsatz [%]** | | | |
|---|---|---|---|---|---|
| | | **1h** | **3 h** | **5 h** | **6 h** |
| 2a | 0 | 95,1 | 95,9 | 96,3 | 96,3 |
| 2b | 0,6 | 99,3 | | | |

### Beispiel 3a: Synthese eines kammständigen Polyethersiloxans (nicht erfindungsgemäß):

In einem mit Thermometer, Intensivkühler und Sigma-Rührer versehenen 1 L Planschliffkolben wurden 207,8 g eines Allylpolyethers (EO-/PO-Mischalkoxylat (42:58 Gew.-%) mit einer IZ von 6,8 g lod/100g), 233,8 g eines Allylpolyethers (EO-/PO-Mischalkoxylat (42:58 Gew.-%) mit einer IZ von 5,0 g lod/100g), 229,5 g eines Allylpolyethers (EO-/PO-Mischalkoxylat (42:58 Gew.-%) mit einer IZ von 17,5 g lod/100g) und 160 g eines Kammsiloxans (mit einer mittleren Kettenlänge von N = 50; SiH-Wert = 1,24 mol/kg) vorgelegt und unter Rühren und Argonüberleitung auf 55°C erhitzt. Dann wurde Karstedt-Katalysator-Lösung mit einer Micropipette zugegeben (c (Ansatz) = 2 ppm Pt) und auf 100°C unter Beobachtung der Exothermie aufgeheizt. In 30-minütigen Abständen wurde der SiH-Umsatz bestimmt (U(soll) > 99%). Es ergaben sich die in Tabelle 3 angegebenen SiH-Umsätze nach der Natriumbutylatmethode.

### Beispiel 3b Synthese eines kammständigen Polyethersiloxans (erfindungsgemäß):

In einem mit Thermometer, Intensivkühler und Sigma-Rührer versehenen 1 L Planschliffkolben wurden 207,8 g eines Allylpolyethers (EO-/PO-Mischalkoxylat (42:58 Gew.-%) mit einer IZ von 6,8 g lod/100g), 233,8 g eines Allylpolyethers (EO-/PO-Mischalkoxylat (42:58 Gew.-%) mit einer IZ von 5,0 g lod/100g), 229,5 g eines Allylpolyethers (EO-/PO-Mischalkoxylat (42:58 Gew.-%) mit einer IZ von 17,5 g lod/100g), 160 g eines Kammsiloxans (mit einer mittleren Kettenlänge von N = 50; SiH-Wert = 1,24 mol/kg) und 5,0 g Wasser (0,6 Gew.-% bezogen auf die Reaktanten) vorgelegt und unter Rühren und Argonüberleitung auf 55°C erhitzt. Dann wurde Karstedt-Katalysator-Lösung mit einer Micropipette zugegeben (c (Ansatz) = 2 ppm Pt) und auf 100°C unter Beobachtung der Exothermie aufgeheizt. Nach 30 min wurde der SiH-Umsatz bestimmt (U(soll) > 99%) und es ergab sich der in Tabelle 3 angegebene SiH-Umsatz nach der Natriumbutylatmethode.

**Tabelle 3: Wassergehalte und SiH-Umsatzverhalten der Beispiele 3a und 3b**

| **Beispiel** | **Wasser [%]** | **SiH-Umsatz [%]** | | |
|---|---|---|---|---|
| | | **30 min** | **1 h** | **1,5 h** |
| 3a | 0 | 97,5 | 98,9 | 99,6 |
| 3b | 0,6 | 99,8 | | |

### Beispiel 4a: Synthese eines linearen Polyethersiloxans (nicht erfindungsgemäß):

In einem mit Thermometer, Intensivkühler und Sigma-Rührer versehenen 1 L Planschliffkolben wurden 240,2 g eines Allylpolyethers (EO-/PO-Mischalkoxylat (42:58 Gew.-%) von Allylalkohol mit einer IZ von 17,5 g lod/100 g) und 500 g eines α, ω-Wasserstoffsiloxans (mittlere Kettenlänge N=100, SiH-Wert = 0,27 mol/kg) vorgelegt und unter Rühren und Argonüberleitung auf 55°C erhitzt. Dann wurde Karstedt-Katalysator-Lösung mit einer Micropipette (c (Ansatz) = 5 ppm Pt) zugegeben. Anschließend wurde auf 95°C aufgeheizt. Nach 30 min, 60 min und 180 min wurde jeweils der SiH-Umsatz bestimmt (U(soll) > 99%). Es ergaben sich die in Tabelle 4 angegebenen SiH-Umsätze nach der Natriumbutylatmethode.

### Beispiel 4b: Synthese eines linearen Polyethersiloxans (erfindungsgemäß):

In einem mit Thermometer, Intensivkühler und Sigma-Rührer versehenen 1 L Planschliffkolben wurden 240,2 g eines Allylpolyethers (EO-/PO-Mischalkoxylat (42:58 Gew.-%) von Allylalkohol mit einer IZ von 17,5 g lod/100 g) und 500 g eines α, ω-Wasserstoffsiloxans (mittlere Kettenlänge N=100; SiH-Wert = 0,27 mol/kg) und 4,4 g Wasser (0,6 Gew.-% bezogen auf die Reaktanten) unter Rühren und Argonüberleitung auf 55°C erhitzt. Dann wurde Karstedt-Katalysator-Lösung mit einer Micropipette (c (Ansatz) = 5 ppm Pt) zugegeben. Anschließend wurde auf 95°C aufgeheizt. Nach 30 min, 60 min und 180 min wurden jeweils der SiH-Umsatz bestimmt (U(soll) > 99%). Es ergaben sich die in Tabelle 4 angegebene SiH-Umsätze nach der Natriumbutylatmethode.

**Tabelle 4: Wassergehalte und SiH-Umsatzverhalten der Beispiele 4a und 4b**

| **Beispiel** | **Wasser [%]** | **SiH-Umsatz [%]** | | |
|---|---|---|---|---|
| | | **30 min** | **90 min** | **160 min** |
| 4a | 0 | 92,9 | 94,8 | 96,0 |
| 4b | 0,6 | 93,9 | 98,9 | 99,0 |

### Beispiel 5a: Synthese eines linearen Polyethersiloxans (nicht erfindungsgemäß):

In einem mit Thermometer, Intensivkühler und Sigma-Rührer versehenen 1 L Planschliffkolben werden 471,1 g eines Allylpolyethers (EO-/PO-Mischalkoxylat (74:26 Gew.-%) von Allylalkohol mit einer IZ von 31,0 g lod/100g) und 350 g eines α, ω-Wasserstoffsiloxans (mittlere Kettenlänge N=20; SiH-Wert = 1,37 mol/kg) vorgelegt und unter Rühren und Argonüberleitung auf 55°C erhitzt. Dann wurde Karstedt-Katalysator-Lösung mit einer Micropipette zugegeben (c (Ansatz) = 2 ppm Pt) und auf 95°C unter Beobachtung der Exothermie aufgeheizt und anschließend bei einer Temperatur von 100-115°C nachgerührt. Nach 30 min, 60 min und 80 min wurde jeweils der SiH-Umsatz bestimmt (U(soll) > 99%). Es ergaben sich die in Tabelle 5 angegebene SiH-Umsätze nach der Natriumbutylatmethode.

### Beispiel 5b: Synthese eines linearen Polyethersiloxans (erfindungsgemäß):

In einem mit Thermometer, Intensivkühler und Sigma-Rührer versehenen 1 L Planschliffkolben wurden 471,1 g eines Allylpolyethers (EO-/PO-Mischalkoxylat (74:26 Gew.-%) mit einer IZ von 31,0 g lod/100g), 350 g eines α, ω-Wasserstoffsiloxans (mittlere Kettenlänge N=20; SiH-Wert = 1,37 mol/kg) und 2,463 g Wasser (0,3 Gew.-% bezogen auf die Reaktanten) vorgelegt und unter Rühren und Argonüberleitung auf 55°C erhitzt. Dann wurde Karstedt-Katalysator-Lösung mit einer Micropipette zugegeben (c (Ansatz) = 2 ppm Pt) und auf 95°C unter Beobachtung der Exothermie aufgeheizt und anschließend bei einer Temperatur von 100-115°C nachgerührt. Nach 30 min, 60 min und 80 min wurden jeweils der SiH-Umsatz bestimmt (U(soll) > 99%). Es ergaben sich die in Tabelle 5 angegebene SiH-Umsätze nach der Natriumbutylatmethode.

### Beispiel 5c: Synthese eines linearen Polyethersiloxans (erfindungsgemäß):

In einem mit Thermometer, Intensivkühler und Sigma-Rührer versehenen 1 L Planschliffkolben wurden 478,8 g eines Allylpolyethers (EO-/PO-Mischalkoxylat (74:26 Gew.-%) von Allylalkohol mit einer IZ von 30,5 g lod/100g), 350 g eines α, ω-Wasserstoffsiloxans (mittlere Kettenlänge N=20; SiH-Wert = 1,37 mol/kg) und 5,1 g Wasser (0,6 Gew.-% bezogen auf die Reaktanten) vorgelegt und unter Rühren und Argonüberleitung auf 55°C erhitzt. Dann wurde Karstedt-Katalysator-Lösung mit einer Micropipette zugegeben (c (Ansatz) = 2 ppm Pt) und auf 95°C unter Beobachtung der Exothermie aufgeheizt und anschließend bei einer Temperatur von 100-115°C nachgerührt. Nach 30 min, 60 min und 80 min wurden jeweils der SiH-Umsatz bestimmt (U(soll) > 99%). Es ergaben sich die in Tabelle 5 angegebene SiH-Umsätze nach der Natriumbutylatmethode.

### Beispiel 5d: Synthese eines linearen Polyethersiloxans (erfindungsgemäß):

In einem mit Thermometer, Intensivkühler und Sigma-Rührer versehenen 1 L Planschliffkolben wurden 471,1 g eines Allylpolyethers (EO-/PO-Mischalkoxylat (74:26 Gew.-%) von Allylalkohol mit einer IZ von 31,0 g lod/100g) und 350 g eines α, ω-Wasserstoffsiloxans (mittlere Kettenlänge N=20; SiH-Wert = 1,37 mol/kg) vorgelegt und unter Rühren und Argonüberleitung auf 55°C erhitzt. Dann wurde Karstedt-Katalysator-Lösung mit einer Micropipette (c (Ansatz) = 2 ppm Pt) und nach 5 min 4,93 g Wasser (0,6 Gew.-% bezogen auf die Reaktanten) zugegeben. Anschließend wurde auf 95°C unter Beobachtung der Exothermie aufgeheizt und anschließend bei einer Temperatur von 100-115°C nachgerührt. Nach 30 min, 60 min und 80 min wurden jeweils der SiH-Umsatz bestimmt (U(soll) > 99%). Es ergaben sich die in Tabelle 5 angegebene SiH-Umsätze nach der Natriumbutylatmethode.

### Beispiel 5e: Synthese eines linearen Polyethersiloxans (erfindungsgemäß):

In einem mit Thermometer, Intensivkühler und Sigma-Rührer versehenen 1 L Planschliffkolben wurden 471,1 g eines Allylpolyethers (EO-/PO-Mischalkoxylat (74:26 Gew.-%) von Allylalkohol mit einer IZ von 31,0 g lod/100g), 350 g eines α, ω-Wasserstoffsiloxans (mittlere Kettenlänge N=20; SiH-Wert = 1,37 mol/kg) und 8,22 g Wasser (1,0 Gew.-% bezogen auf die Reaktanten) vorgelegt und unter Rühren und Argonüberleitung auf 55°C erhitzt. Dann wurde Karstedt-Katalysator-Lösung mit einer Micropipette zugegeben (c (Ansatz) = 2 ppm Pt) und auf 95°C unter Beobachtung der Exothermie aufgeheizt und anschließend bei einer Temperatur von 100-115°C nachgerührt. Nach 30 min, 60 min und 80 min wurde jeweils der SiH-Umsatz bestimmt (U(soll) > 99%). Es ergaben sich die in Tabelle 5 angegebene SiH-Umsätze nach der Natriumbutylatmethode.

**Tabelle 5: Wassergehalte und SiH-Umsatzverhalten der Beispiele 5a-e**

| **Beispiel** | **Wasser [%]** | **SiH-Umsatz [%]** | | | |
|---|---|---|---|---|---|
| | | **0,5 h** | **1 h** | **1,33 h** | **1,5 h** |
| 5a | 0 | 96,7 | 98,4 | 98,5 | 98,6 |
| 5b | 0,3 | 98,9 | 99,4 | - | - |
| 5c | 0,6 | 99,1 | 99,7 | 99,7 | - |
| 5d | 0,6 | 99,6 | | | |
| 5e | 1,0 | 99,8 | | | |

### Fazit:

Bei Betrachtung der in den Tabellen 1-5 angegebenen SiH-Umsatzverhaltens ist dem Fachmann klar ersichtlich, dass die Hydrosilylierungsreaktion in Anwesenheit von Wasser deutlich schneller verläuft als bei analoger Fahrweise, jedoch in Abwesenheit von Wasser.

Basierend auf Beispiel 5 ist darüber hinaus klar ersichtlich, dass man je nach Anwendungsfall eine optimale Wassermenge identifizieren/ermitteln kann. Im konkreten Beispiel 5b wird ersichtlich, dass 0,3 Gew.-% Wasser bereits einen positiven Einfluss auf das Umsatzverhalten zeigt, jedoch eine weitere Erhöhung auf 0,6 Gew.-% noch vorteilhafter ist. Eine weitere Erhöhung auf 1 Gew.-% bringt keine weiteren Vorteile, so dass im konkreten Fall beispielsweise bevorzugt mit 0,6 Gew.-% Wassergehalt gearbeitet werden kann.

## Patentansprüche

1. Verfahren zur Herstellung von organisch modifizierten Polysiloxanen und/oder Silanen durch Hydrosilylierung, umfassend folgende Schritte:
a) Umsetzung mindestens eines SiH-funktionellen Siloxans und/oder Silans mit mindestens einer ungesättigten organischen Verbindung in Anwesenheit mindestens eines Edelmetallkatalysators, sowie
b) optionale Destillation,
c) optionale Nachbehandlung mit mindestens einem Adsorbens und optional abschließende Feststoffabtrennung, vorzugsweise durch Filtration,
**dadurch gekennzeichnet, dass** die Umsetzung in Schritt a) in Anwesenheit von Wasser durchgeführt wird,
wobei bei der Umsetzung in Schritt a) 0,01 bis 5 Gew.-% Wasser eingesetzt werden, Gew.-% bezogen auf die Gesamtmasse der Reaktanten.

2. Verfahren gemäß Anspruch 1, **dadurch gekennzeichnet, dass** die mindestens eine ungesättigte organische Verbindung ausgewählt ist
a) aus der Gruppe der terminal ungesättigten organischen Verbindungen,
vorzugsweise aus der Gruppe der terminal ungesättigten Alkenverbindungen, die ggf. noch weitere Substituenten tragen können,
bevorzugt ausgewählt aus der Gruppe bestehend aus Allylglycidether, Glycerinmonoallylether, Allylglykol, Allyloxyethanol, Allylanisol, Allylphenol, Eugenol, Hexenol, C6-C20-Alken, Undecylensäure, Undecylensäuremethylester, Vinylcyclohexenmonooxid und terminal-ungesättigte Polyether,
weiter bevorzugt ausgewählt aus der Gruppe bestehend aus Allylglykol, Tetradecen, Hexadecen, Octadecen, Undecylensäuremethylester und terminal-ungesättigte Polyether,
wobei terminal-ungesättigte Polyether, wie vorzugsweise Allyl- und/oder Methallyl-funktioneller Polyether, besonders bevorzugt sind, und wobei terminal-ungesättigte Allylpolyether ganz besonders bevorzugt sind, und/oder
b) aus der Gruppe der ungesättigten organischen Verbindungen mit mindestens einer internen C-C-Doppel- oder C-C-Dreifachbindung, wie vorzugsweise Alkin-Derivate.

3. Verfahren gemäß einem der Ansprüche 1 oder 2, **dadurch gekennzeichnet, dass** der mindestens eine Edelmetallkatalysator ausgewählt ist
aus Verbindungen des Platins, Palladiums, Rhodiums, Rutheniums, Iridiums und/oder Osmiums, vorzugsweise Verbindungen des Platins,
und/oder
aus Komplexen des Platins, Palladiums, Rhodiums, Rutheniums, Iridiums und/oder Osmiums, vorzugsweise Komplexen des Platins,
insbesondere bevorzugt wird der Karstedt-Katalysator eingesetzt.

4. Verfahren gemäß einem der Ansprüche 1 bis 3, **dadurch gekennzeichnet, dass** bei der Umsetzung in Schritt a) 0,05 bis 2,0 Gew.-% Wasser, bevorzugt 0,1 bis 1 Gew.-% Wasser, besonders bevorzugt 0,15 bis 0,7 Gew.-% Wasser eingesetzt werden, Gew.-% bezogen auf die Gesamtmasse der Reaktanten.

5. Verfahren nach einem der Ansprüche 1 bis 4, **dadurch gekennzeichnet, dass** die Hydrosilylierung unter inerter Atmosphäre, bevorzugt unter N₂-Atmosphäre oder ArgonAtmosphäre, und/oder, vorzugsweise bei Temperaturen von 50 bis 130°C durchgeführt wird.

6. Hydrosilylierungsprodukt, vorzugsweise organisch modifiziertes Polysiloxan und/oder Silan, insbesondere bevorzugt Polyethersiloxan, erhältlich durch ein Verfahren nach einem der Ansprüche 1 bis 5.

7. Hydrosilylierungsprodukt nach Anspruch 6, **dadurch gekennzeichnet, dass** es der Formel (I) genügt:
Mₐ M'_{b} M"_{c} D_{d} D'ₑ D"_{f} Tg Qₕ Formel (I)
wobei
M = [R¹₃SiO_{1/2}]
M` = [R² R¹₂SiO_{1/2}]
M" = [R³ R¹₂SiO_{1/2}]
D = [R¹₂SiO_{2/2}]
D` = [R² R¹SiO_{2/2}]
D" = [R³ R¹SiO_{2/2}]
T = [R¹SiO_{3/2}]
Q = [SiO_{4/2}]
a = 0 - 20, bevorzugt 0 - 10, insbesondere bevorzugt 2,
b = 0 - 20, bevorzugt 0 - 10, insbesondere bevorzugt 0 oder 2,
c = 0 - 20, bevorzugt 0 - 10, insbesondere bevorzugt 0 oder 2,
d = 0 - 1000, bevorzugt 0 - 500, insbesondere bevorzugt 0 - 200,
e = 0 - 30, bevorzugt 1 - 15, insbesondere bevorzugt 1 - 10,
f = 0 - 30, bevorzugt 0 - 15, insbesondere bevorzugt 0 - 10,
g = 0 - 20, bevorzugt 0 - 10, insbesondere bevorzugt 0 - 5,
h = 0 - 20, bevorzugt 0 - 15, insbesondere bevorzugt 0 - 5,
mit der Maßgabe, dass die Summe aus a + b + c + d + e + f + g + h ≥ 3, sowie die Summe aus b + c + e + f ≥ 1 sein muss, sowie die Summe aus e + f bevorzugt ≥ 1 ist,
und
R¹ = unabhängig voneinander gleiche oder verschiedene Kohlenwasserstoffreste mit 1 - 7 Kohlenstoffatomen oder H, bevorzugt Methyl, Ethyl oder Phenyl, insbesondere bevorzugt Methyl,
R² = unabhängig voneinander gleiche oder verschiedene Polyetherreste,
R³ = unabhängig voneinander gleiche oder verschiedene Kohlenwasserstoffreste mit 8 - 20 Kohlenstoffatomen die auch Heteroatome enthalten und weiter substituiert sein können, bevorzugt handelt es sich um SiC-verknüpfte Reste resultierend aus Alkindiol, sowie deren Alkoxylate, Allylglycidether, Allylglykol, Glycerinmonoallylether, Allylanisol, Eugenol, Hexenol, Hexadecen, Octadecen, Undecylensäure und/oder Undecylensäuremethylester, insbesondere bevorzugt Hexadecen, Octadecen, Eugenol und/oder Glycerinmonoallylether.

8. Verwendung von Produkten nach Anspruch 6 oder 7 als grenzflächenaktive Substanz.

9. Verwendung von Produkten nach Anspruch 6 oder 7 als Dispergieradditiv, Entschäumer, Benetzungshilfsmittel, Hydrophobierungsmittel oder vernetzendes Additiv vorzugsweise zum Einsatz in Pasten, Farben, Lacken, Überzügen, Beschichtungen und/oder Anstrichmitteln.

10. Verwendung von Produkten nach Anspruch 6 oder 7
(a) in Reinigungs- und/oder Pflegeformulierungen geeignet zur Reinigung und/oder Pflege harter Oberflächen und/oder geeignet zur Reinigung, Behandlung und/oder Nachbehandlung von Textilien, sowie in kosmetischen Produkten, oder
(b) als Schaumstabilisatoren oder Schaumadditive für Polyurethanschäume oder
(c) als Adjuvant zur Verbesserung der Wirkung von Pflanzenschutzwirkstoffen und/oder als Träger für Pflanzenschutzwirkstoffe, wobei die Pflanzenschutzwirkstoffe vorzugsweise aus mikrobiologischen Pflanzenschutzwirkstoffen ausgewählt sind.
